Europäisches Patentamt

European Patent Office

Office européen des brevets

(19)

(11) **EP 1 478 042 A1**

(12) **EUROPÄISCHE PATENTANMELDUNG**

(43) Veröffentlichungstag:
17.11.2004 Patentblatt 2004/47

(51) Int Cl.⁷: **H01M 8/02**, H01M 6/52,
H01M 10/52, C22B 11/02

(21) Anmeldenummer: 03011018.3

(22) Anmeldetag: 16.05.2003

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(71) Anmelder: **Umicore AG & Co. KG
63457 Hanau-Wolfgang (DE)**

(72) Erfinder:
• **Kayser, Bernd, Dr.
63739 Aschaffenburg (DE)**

• **Romeo-Ojeda, José-Manuel
63457 Hanau (DE)**
• **Hagelüken, Christian, Dr.
63457 Hanau (DE)**
• **Kleinwächter, Ingo, Dr.
63457 Hanau (DE)**

(74) Vertreter: **VOSSIUS & PARTNER
Siebertstrasse 4
81675 München (DE)**

(54) **Verfahren zur Anreicherung von Edelmetallen aus fluorhaltigen Brennstoffzellenkomponenten**

(57) Die Erfindung betrifft ein Verfahren zur Anreicherung von Edelmetallen aus fluorhaltigen Komponenten von Brennstoffzellen, beispielsweise aus PEM-Brennstoffzellenstapeln, DMFC-Brennstoffzellen, katalysatorbeschichteten Membranen (engl. catalyst coated membranes, CCMs), Membran-Elektroden-Einheiten (MEEs), Katalysatorpasten usw. Das Verfahren basiert auf einem ggf. mehrstufigen Wärmebehandlungsprozess, der eine Verbrennung und/oder ein Schmelzverfahren umfasst. Es ermöglicht eine kostengünstige, einfache Anreicherung von Edelmetallen. Ein anorganischer Zuschlagstoff bindet den während der Wärmebehandlung der fluorhaltigen Komponenten entstehenden Fluorwasserstoff, so dass es zu keinen schädlichen Fluorwasserstoff-Emissionen kommt.

Das Verfahren findet Einsatz bei der Rückgewinnung von Edelmetallen, die als Bestandteile in Brennstoffzellen, Elektrolysezellen, Batterien oder ähnliches vorkommen.

EP 1 478 042 A1

**Beschreibung**

Die Erfindung betrifft ein Verfahren zur Anreicherung von Edelmetallen aus fluorhaltigen Komponenten für Brennstoffzellen, beispielsweise aus PEM-Brennstoffzellen, DMFC-Brennstoffzellen, katalysatorbeschichteten Membranen (engl. catalyst coated membranes, CCMs), Membran-Elektroden-Einheiten (MEEs) etc. Das Verfahren ermöglicht die Anreicherung von Edelmetallen aus fluorhaltigen Brennstoffzellenkomponenten in einem Wärmebehandlungsprozess ohne schädliche Fluor- bzw. Fluorwasserstoff-Emissionen und findet Einsatz bei der Rückgewinnung von Edelmetallen, die als Bestandteile in Brennstoffzellen, Elektrolysezellen, Batterien oder ähnliches vorkommen.

Brennstoffzellen wandeln einen Brennstoff und ein Oxidationsmittel örtlich voneinander getrennt an zwei Elektroden in Strom, Wärme und Wasser um. Als Brennstoff kann Wasserstoff, Methanol oder ein wasserstoffreiches Gas, als Oxidationsmittel Sauerstoff oder Luft dienen. Der Vorgang der Energieumwandlung in der Brennstoffzelle zeichnet sich durch eine große Schadstofffreiheit und einen besonders hohen Wirkungsgrad aus. Aus diesem Grunde gewinnen Brennstoffzellen zunehmend Bedeutung für alternative Antriebskonzepte, Hausenergieversorgungsanlagen sowie portable Anwendungen.

PEM-Brennstoffzellen sind in einer stapelweisen Anordnung ("Stack") aus vielen Brennstoffzelleneinheiten aufgebaut. Diese sind zur Erhöhung der Betriebsspannung elektrisch in Reihe geschaltet. Das Kernstück einer PEM-Brennstoffzelle ist die sogenannte Membran-Elektroden-Einheit (MEE). Die MEE besteht aus der Protonen leitenden Membran (Polymerelektrolyt- oder Ionomermembran), den beiden Gasverteilerschichten (engl. "gas diffusion layers", GDLs oder "backings") an den Membranseiten und den zwischen Membran und Gasverteilersubstraten liegenden Elektrodenschichten. Eine der Elektrodenschichten ist als Anode für die Oxidation von Wasserstoff und die zweite Elektrodenschicht als Kathode für die Reduktion von Sauerstoff ausgebildet.

Diese Katalysatorkomponenten in Brennstoffzellenstacks enthalten je nach Spezifikation und Einsatzbereich erhebliche Mengen an Edelmetallen wie Platin, Ruthenium, Palladium und andere. Beispielsweise sind in einem 50 kW PEM-Stack, wie er gegenwärtig für mobile Anwendungen in PKWs zum Einsatz kommt, etwa 50 bis 100 g Platin enthalten (d.h ca. 1 - 2 g Platin/kW). Bei einer großflächigen Einführung der Brennstoffzellentechnologie für Automobile in hohen Stückzahlen bedeutet dies die Bereitstellung von erheblichen Platinmengen, zumindest für die erste Generation der Fahrzeuge. Darüber hinaus muss dann ein Rückgewinnungsverfahren für die in den Brennstoffzellenstacks gebundenen Edelmetalle bereitstehen, damit der Edelmetallkreislauf und damit die Versorgung mit Edelmetallen sichergestellt ist.

Die Brennstoffzellenkomponenten, die für die Rückgewinnung der Edelmetalle aufgearbeitet werden müssen, setzen sich aus den verschiedensten Materialien zusammen.

Die Polymerelektrolyt-Membran besteht aus Protonen leitenden Polymermaterialien. Diese Materialien werden im folgenden auch kurz als Ionomere bezeichnet. Bevorzugt wird ein Tetrafluorethylen-Fluorvinylether-Copolymer mit Sulfonsäuregruppen verwendet. Dieses Material wird zum Beispiel unter dem Handelsnamen Nafion® von DuPont vertrieben. Es sind jedoch auch andere Ionomermaterialien, wie dotierte sulfonierte Polyetherketone oder dotierte sulfonierte oder sulfinierte Arylketone bzw. Polybenzimidazole einsetzbar. Geeignete Ionomermaterialien sind von O. Savadogo in "Journal of New Materials for Electrochemical Systems" I, 47-66 (1998) beschrieben. Für die Verwendung in Brennstoffzellen müssen diese Membrane im Allgemeinen eine Dicke zwischen 10 und 200 µm aufweisen.

Die Elektrodenschichten für Anode und Kathode enthalten neben dem Protonen leitenden fluorhaltigen Polymer (z.B. Nafion®) Elektrokatalysatoren, welche die jeweilige Reaktion (Oxidation von Wasserstoff beziehungsweise Reduktion von Sauerstoff) katalytisch unterstützen. Als katalytisch aktive Komponenten werden bevorzugt die Metalle der Platingruppe des Periodensystems der Elemente eingesetzt. Häufig verwendet man sogenannte Trägerkatalysatoren, bei denen die katalytisch aktiven Platingruppenmetalle in hochdisperser Form auf die Oberfläche eines leitfähigen Trägermaterials, beispielsweise Ruß, aufgebracht wurden.

Die Gasverteilerschichten (GDLs) bestehen in der Regel aus Kohlefaserpapier oder Kohlefasergewebe, die gewöhnlich mit fluorhaltigen Polymeren (PTFE, Polytetrafluorethylen, etc.) hydrophobiert sind. Sie ermöglichen einen guten Zugang der Reaktionsgase zu den Reaktionsschichten und eine gute Ableitung des Zellenstroms und des sich bildenden Wassers.

Beim Aufbau von Brennstoffzellenstacks werden GDLs und MEEs unter Verwendung von sog. Bipolarplatten aufeinandergestapelt. Die Abfolge ist hierbei in der Regel: Endplatte - GDL (Anode) - CCM - GDL (Kathode) - Bipolarplatte - GDL (Anode) - CCM - GDL (Kathode) - Bipolarplatte (usw.) - Endplatte. Je nach gefordertem Leistungsbereich werden bis zu 100 MEEs in einem Stack übereinandergestapelt. Die Bipolarplatten bestehen in der Regel aus leitfähigem Kohlenstoff, vorzugsweise Graphit. Sie enthalten gefräste Kanäle in einem bestimmten Muster, durch die die Gasversorgung (Brenngas zur Anode und Luft zur Kathode) im Stack bewirkt wird. Bei einer Rückgewinnung von Edelmetallen aus den PEMFC-Stacks können die Bipolarplatten grundsätzlich beim Auseinanderbau des Stacks abgetrennt und weiterverwertet werden. Es sind jedoch auch Verfahren möglich, bei denen der gesamte Stack (ink1. der Bipolarplatten) der Rückgewinnung zugeführt wird.

Die Kommerzialisierung der PEM-Brennstoffzellentechnologie erfordert neben großtechnischen Produktionsverfahren für katalysatorbeschichtete Membranen (CCMs), katalysatorbeschichtete Gasverteilersubstrate (CCBs) sowie Membran-Elektrodeneinheiten (MEEs) nicht zuletzt auch großtechnische und rationelle Verfahren zur Rückgewinnung der Edelmetalle aus diesen Komponenten. Nur durch den Einsatz solcher Verfahren, und damit verbunden die Verwendung von Edelmetallen aus dem Sekundärkreislauf, wird die Brennstoffzellentechnologie ökonomisch und ökologisch sinnvoll. Die Bereitstellung entsprechender Rückgewinnungsverfahren schafft die Voraussetzung dafür, dass Brennstoffzellenaggregate in hoher Stückzahl für mobile, stationäre und portable Anwendungen auf den Markt kommen können.

Wärmebehandlungsprozesse, insbesondere pyrometallurgische Verfahren, zur Aufarbeitung und Anreicherung edelmetallhaltiger Reststoffe ("Gekrätze") sind seit langer Zeit bekannt. Kernstücke der weltweit eingesetzten Verfahren sind der Schachtofen, der Treibofen bzw. Konverter, Elektroöfen (Plasma- oder Lichtbogenöfen) sowie gas- oder elektrisch beheizte Tiegelöfen. Der Schachtofenprozess eignet sich vor allem zur Aufarbeitung von silberreichem Gekrätze, wobei als Sammlermetall für das Edelmetall Blei verwendet wird. Neben dem Edelmetall enthaltenden "Werkblei" entsteht Kupferstein und eine Schlacke, die die nichtmetallischen Bestandteile des Gekrätzes enthält. Zuschlagstoffe wie Kalkstein, Magnesiumoxid, Sand und Kiesabbrand dienen zur Einstellung der Viskosität der flüssigen Schlakkenschmelze (vgl. Lüger, Lexikon der Hüttentechnik, Deutsche Verlagsanstalt Stuttgart, 1963, S. 548 bis 553).

Weiterhin sind zur Anreicherung von Edelmetallen aus Katalysatoren konventionelle Verbrennungsprozesse bekannt. Rückstände von Katalysatoren mit brennbaren Kohleträgern (wie beispielsweise Pd/Aktivkohle) werden in Gasöfen verbrannt, und die edelmetallhaltige Asche wird aufgearbeitet. Im Normalfall ist die Edelmetallkonzentration nach dem Veraschen ausreichend hoch, um einen direkten Aufschluss mit nasschemischen Methoden durchführen zu können (s. hierzu C. Hagelüken, "Edelmetalleinsatz und -Recycling in der Katalysatortechnik", Erzmetall 49, Nr. 2, Seite 122 - 133 (DZA Verlag für Kultur und Wissenschaft, D-04600 Altenburg).

Zur Aufarbeitung von edelmetallhaltigen Brennstoffzellenkomponenten gibt es jedoch nur wenige Beispiele in der Literatur.

In US-A-5,133,843 wird zur Aufarbeitung bzw. Rückgewinnung ("rejuvenating") einer edelmetallbeschichteten Ionomermembran ein Verfahren vorgeschlagen, das eine Auflösung der Edelmetalle in Königswasser beinhaltet. Die Ionomermembran ist danach für Brennstoffzellen wieder verwendbar.

JP 11288732 beschreibt eine Methode zur Rückgewinnung von Komponenten für Brennstoffzellen, wobei die Membran-Elektrodeneinheiten mit einem Lösungsmittel behandelt werden, welches das fluorhaltige Ionomer bzw. die Membran auflöst. Dadurch wird das Fluorpolymer von metallischen Katalysatoren und anderen unlöslichen Bestandteilen abgetrennt. Nachteil des Verfahrens ist der Einsatz von organischen Lösungsmitteln, die Probleme hinsichtlich Brennbarkeit, Arbeitssicherheit, Umweltbelastung und Toxizität bereiten. Die weitere Aufarbeitung der fluorhaltigen Katalysatorkomponenten wird nicht beschrieben.

Es war eine Aufgabe der Erfindung, ein Verfahren zur Anreicherung von Edelmetallen aus fluorhaltigen Brennstoffzellenkomponenten bereitzustellen, das die beschriebenen Nachteile überwindet.

Diese Aufgabe wird durch das Verfahren gemäß Anspruch 1 gelöst. Vorteilhafte Ausführungsformen werden in den Unteransprüchen beschrieben.

Das erfindungsgemäße Verfahren beruht auf einem Wärmebehandlungsprozess zur Anreicherung von Edelmetallen aus fluorhaltigen Brennstoffzellenkomponenten, der in Gegenwart eines anorganischen Zuschlagstoffes durchgeführt wird.

Bei dem erfindungsgemäßen Verfahren wird die Wärmebehandlung der edelmetallhaltigen Brennstoffzellenkomponenten in Gegenwart eines anorganischen Zuschlagstoffes durchgeführt, wobei die aus den fluorhaltigen Bestandteilen entstehenden Fluorwasserstoffsäure (HF) bzw. das Fluorid ($F^-$) "in-situ" mit dem anorganischen Zuschlagstoff abgebunden wird. Eine Emission von Fluorwasserstoff (HF) in den Abgasen des Prozesses lässt sich dadurch verhindern.

Ein Vorteil des erfindungsgemäßen Verfahrens ist, dass das aus dem anorganischen Zuschlagstoff und der fluorhaltige Verbindungen in der Abbindereaktion entstandene fluorhaltige Produkt im Verlauf des weiteren Anreicherungsprozesses von dem edelmetallhaltigen Material abgetrennt werden kann. Damit wird eine Störung des nachfolgenden Edelmetalltrennungsganges durch Fluoranteile verhindert. Die Abtrennung des fluorhaltigen Reaktionsproduktes ist in nasschemischen Verfahren beispielsweise durch Laugen der Edelmetalle und anschließende Filtration bzw. Separation, in Schmelzverfahren beispielsweise durch Verschlackung und anschließende Abtrennung der Metallschmelze möglich.

Es hat sich überraschenderweise gezeigt, dass die "in-situ"-Bindung von HF bzw. Fluorid bei der Wärmebehandlung schon mit kleinen Mengen an anorganischen Zuschlagstoffen, wie beispielsweise mit Calciumcarbonat ($CaCO_3$), schnell und fast quantitativ erfolgt.

Durch den Zusatz des anorganischen Zusatzstoffs, beispielsweise von Calciumcarbonat ($CaCO_3$) bildet sich aus dem organisch gebundenen Fluor, beispielsweise aus dem Perfluorsulfonsäurepolymer (Nafion®), das als Membranmaterial verwendet wird, eine gebundene Form, wie beispielsweise Calciumfluorid ($CaF_2$). Dadurch wird Fluorwasserstoff bzw. Fluorid im Verbrennungsrückstand (bzw. in der Schlacke) gebunden und nicht an die Ofenatmosphäre bzw. an das Abgas abgegeben.

Der erfindungsgemäße Wärmebehandlungsprozess in Gegenwart von anorganischen Zuschlagstoffen kann im Falle einer Perfluoralkylverbindung des Typs $(-CF_2-CF_2-)_n$ und eines Metalloxids MO mit der folgenden Bruttogleichung dargestellt werden:

$$(-CF_2-CF_2-)_n + 2n\ MO + n\ O_2 \rightarrow 2n\ MF_2 + 2n\ CO_2 \qquad (1)$$

$M = M^{2+} = $ Mg, Ca, Sr, Ba, etc.

Sinngemäß lässt sich diese Gleichung auch auf substituierte perfluorierte Verbindungen, z.B. auf Verbindungen des Typs $(-CFR_1-CFR_2-)_n$, wie sie in Ionomermembranen verwendet werden, übertragen. Weiterhin lässt sich diese Gleichung sinngemäß auch auf den Einsatz von einwertigen ($M^+$) oder dreiwertigen Metallen ($M^{3+}$) und andere anorganische Zuschlagstoffe wie Carbonate, Hydrogencarbonate und Hydroxide übertragen.

Bei dem erfindungsgemäßen Anreicherungsverfahren kann der Fluoranteil aus den verschiedensten fluorhaltigen Komponenten "in-situ" abgebunden werden.

Beispiele für fluorhaltige Verbindungen, Zubereitungen und Komponenten sind

- Perfluorsulfonsäurepolymere und fluorhaltige Ionomermembranen wie Nafion®, Flemion®, Gore-Select® , Aciplex® etc.;

- vollfluorierte Polymere wie PTFE®, Hostaflon® oder Teflon®;

- Dispersionen, die zum Hydrophobieren von GDLs Verwendung finden (z.B. wässrige Dispersionen aus Teflon® oder Hostaflon®);

- fluorierte Copolymere, wie z.B. FEP (Copolymerisat aus Tetrafluorethylen und Hexafluorpropylen) oder PFA (Polytetrafluorethylen mit vollfluorierter Alkoxyseitenkette);

- Kompositmembranen, die ein Stützgewebe aus fluorierten Polymeren enthalten (wie beispielsweise Gore-select® Membranen); und

- teilfluorierte oder perfluorierte Netzmittel, Additive und Tenside (z.B. Fluorad®, Perfluoroctansäure, etc.), die in verschiedenen Zubereitungen zum Einsatz kommen.

Durch die Anwesenheit des anorganischen Zuschlagstoffes werden die Emissionen an HF und Fluorid nahezu vollständig reduziert, die Verwendung einer teuren Abgasreinigungsanlage entfällt, das Verfahren ist kostengünstig und in einfachen Apparaturen durchführbar. Zur Sicherstellung der völligen Emissionsfreiheit der Wärmebehandlungsanlage können einfache, kostengünstige Sicherheitswäscher installiert werden.

Die erfindungsgemäße Wärmebehandlung kann entweder einen Verbrennungsprozess (zum Beispiel ein Pyrolyseverfahren) oder ein Schmelzverfahren (zum Beispiel einen schmelzmetallurgischen Prozess) oder auch eine Kombination beider Verfahren umfassen.

Führt man die Wärmebehandlung als Verbrennungsprozess durch, so bleibt das aus dem anorganischen Zuschlagstoff und dem Fluor der fluorhaltigen Brennstoffzellenkomponente entstandene fluorhaltige Reaktionsprodukt (im Falle von $CaCO_3$ als Zuschlagstoff ist dies $CaF_2$) ggf. mit weiteren Inertanteilen (z.B. unverbrannten Resten) als Rückstand zurück und wird abgetrennt. Die Abtrennung ist in einem nasschemischen Verfahren beispielsweise durch Laugen der Edelmetalle und anschließende Filtration bzw. Separation möglich. Sie kann aber auch in einem nachfolgenden Schmelzverfahren erfolgen.

Die Verbrennung (Pyrolyse) als Wärmebehandlungsverfahren ist aufgrund ihrer einfachen Handhabung und hohen Ausbeute zur Anreicherung von Edelmetallen vorteilhaft. Verbrennungsverfahren beinhalten keinen nasschemischen Schritt, führen daher nicht zu Rückständen und Restlaugen und gewährleisten eine schnelle Aufkonzentration des Edelmetalls. Bei der pyrolytischen Aufarbeitung von fluorhaltigen Brennstoffzellenkomponenten und Verbundmaterialien (wie beispielsweise PEM-Stacks, MEEs, GDLs und katalysatorbeschichteten Ionomermembranen) würden ohne die Zugabe des anorganischen Zuschlagstoffs bei der Verbrennung aus den organischen Polymeren jedoch Fluorwasserstoffsäure (HF) entstehen. Dieses Gas wäre in den Verbrennungsgasen enthalten, so dass eine zusätzliche Reinigungsanlage zur Entfernung notwendig wäre. Fluorwasserstoffsäure erfordert weiterhin aufgrund seiner Toxizität und Korrosionseigenschaften besondere Sicherheitsmaßnahmen, wie beispielsweise Rohrleitungen, Filter und Wäscher aus Edelstahl. Aus diesen Gründen ist die pyrolytische Anreicherung von Edelmetallen aus fluorhaltigen Brennstoffzellenkomponenten bisher mit großen technischen Problemen verbunden.

Weiterhin müssten die Fluoranteile aus dem edelmetallhaltigen Gekrätz bzw. Gemenge entfernt werden, da sie im späteren Aufarbeitungsprozess bzw. im Edelmetalltrennungsgang stören und zu einer Ausbeutenreduktion führen würden. Diese Nachteile werden erfindungsgemäß durch die Zugabe des anorganischen Zuschlagstoffs vermieden.

Führt man die Wärmebehandlung als Schmelzverfahren durch, so wird das anzureichernde edelmetallhaltige Material direkt mit dem anorganischen Zuschlagstoff in Gegenwart eines Edelmetallsammlers (Kupfer, Silber usw.) und ggf. weiteren bekannten Schlackebildnern in einem Schmelzofen behandelt. Es werden die Inertanteile (unverbrannte Reste) zusammen mit dem fluorhaltigen Reaktionsprodukt verschlackt, d.h. in eine Schlacke überführt, während eine edelmetallhaltige Metallschmelze zurückbleibt.

Die edelmetallhaltige Metallschmelze kann mit Hilfe von nasschemischen Methoden weiterverarbeitet werden. Diese konventionellen Methoden sind dem Fachmann auf dem Gebiet der Edelmetallscheidung hinlänglich bekannt und beispielsweise im Degussa-Edelmetalltaschenbuch, 2. Auflage, Seiten 36-50 (Hüthig-Verlag Heidelberg 1995) beschrieben.

Für den erfindungsgemäßen Wärmebehandlungsprozess kommen als Öfen in der Regel Tiegelöfen, Kammeröfen, Rohröfen oder Drehrohröfen zum Einsatz, die elektrisch oder mit Gas beheizt sein können. Die Verbrennung findet unter oxidativen Bedingungen (Luftatmosphäre) statt, wobei vorzugsweise ein Gasbrenner zur Zündung des Pyrolysegutes eingesetzt wird. Heftiges Feuer ist zu vermeiden, da sonst Edelmetall-Emissionen im Abgas auftreten.

Erfolgt die Wärmebehandlung im Rahmen eines Schmelzverfahrens, so können beispielsweise Tiegelöfen, Konverter oder Drehtrommelöfen eingesetzt werden.

Die Temperaturen für die Wärmebehandlung liegen typischerweise zwischen 500 und 1200 °C, wobei Behandlungszeiten von 30 Minuten bis zu 8 Stunden zweckmäßig sind. In Sonderfällen können die Verfahren auch über Nacht bzw. mehrere Tage betrieben werden.

Ebenso wie beim Verbrennungsverfahren werden durch die Zugabe des anorganischen Zuschlagstoffs HF-Emissionen im Wesentlichen vermieden.

Ausgangsmaterialien für das erfindungsgemäße Anreicherungsverfahren sind grundsätzlich alle fluorhaltige Komponenten, die in Membran-Brennstoffzellenstacks (PEMFC, DMFC) Verwendung finden. Hierzu gehören

- einseitig oder zweiseitig katalysatorbeschichtete Membranen (sog. "CCMs"),

- katalysatorbeschichtete Gasverteilerschichten (sog. "GDLs"),

- Membran-Elektrodeneinheiten (MEEs) mit beidseitig angebrachten Gasverteilerschichten ("5-lagige" MEEs),

- MEEs mit oder ohne Schutzfilm bzw. Dichtung, und

- 5-lagige MEEs mit integrierten bipolaren Platten (sog. "7-lagige" oder "9-lagige" MEEs).

Grundsätzlich können auch PEM-Brennstoffzellenstapel (sog. "stacks") nach entsprechender Vorbereitung und/oder maßgeschneidertem Auseinanderbau (Demontage) dem erfindungsgemäßen Verfahren zugeführt werden.

Des Weiteren können auch fluor- und edelmetallhaltige Abfälle aus der Produktion der Brennstoffzellen-Komponenten (wie beispielsweise Katalysatorreste, Pastenrückstände, Katalysatortinten sowie weitere Vorprodukte oder Ausschussteile aus der Fertigung von MEEs, CCMs und GDLs) dem Anreicherungsverfahren zugeführt werden.

Weiterhin können auch Zwischenprodukte aus der Edelmetall-Aufarbeitung von katalysatorbeschichteten Membranen (CCMs) und MEEs, beispielsweise abgetrennte Katalysatorschichten von CCMs oder abgelösten Elektrodenschichten in dem erfindungsgemäßen Anreicherungsverfahren verarbeitet werden. Die Membrankomponente kann dann anschließend zur weiteren Aufarbeitung, Reinigung und/oder Wiederverwendung dem Membranhersteller zugeführt werden.

Die fluorhaltigen Brennstoffzellenkomponenten können, falls gewünscht, vor der Durchführung der Wärmebehandlung mit geeigneten Verfahren und Einrichtungen zerkleinert werden. Für die Zerkleinerung von MEEs und CCMs haben sich zum Beispiel Häckselverfahren bewährt. Zur Zerkleinerung von MEEs mit bipolaren Platten können Backenbrecher und/oder Hammermühlen eingesetzt werden.

Als Zuschlagstoffe können anorganische Verbindungen der Elemente aus der ersten, zweiten und dritten Hauptgruppe (Gruppen IA, IIA, IIIA) des Periodensystems dienen. Beispiele sind Oxide wie $Na_2O$, $K_2O$, MgO oder CaO; Carbonate wie $CaCO_3$ oder $MgCO_3$; Hydrogencarbonate wie $CaHCO_3$ und Hydroxide wie $Ca(OH)_2$ oder $Al(OH)_3$. Weiterhin können Nitrate, Sulfate, Phosphate, Hydrogenphosphate sowie Acetate, Oxalate und Formiate der Elemente der ersten bis dritten Hauptgruppe als Zuschlagstoffe eingesetzt werden. Dabei sind die Verbindungen einzeln oder als Gemische sowie in wasserfreier oder wasserhaltiger Form einsetzbar. Bevorzugt werden Carbonate und Hydroxide als anorganische Zuschlagstoffe verwendet.

Der Zuschlagstoff wird in der Regel in Mengen, bis zu einem 100-fachen Überschuss, vorzugsweise bis zu einem 10-fachen Überschuss (bezogen auf die molare Menge des zu bindenden Fluors) zugegeben und nach der Zugabe mit Hilfe geeigneter Mischaggregate (z.B. Taumelmischer) mit dem zerkleinerten Material homogenisiert.

Die folgenden Beispiele sollen das erfindungsgemäße Verfahren weiter erläutern.

**BEISPIELE**

**Beispiel 1**

Dieses Beispiel beschreibt die erfindungsgemäße Anreicherung von Platin (Pt) aus fluor- und edelmetallhaltigen Katalysatorrückständen unter Zusatz eines anorganischen Zuschlagstoffes.

10g fluorpolymerhaltiges Katalysatorgemisch werden durch Ablösen der Elektrodenschichten von katalysatorbeschichteten Membranen (CCMs) gewonnen. Der Gehalt an F-Polymer beträgt ca. 19 Gew.%, der Gehalt an Fluor (F) ca. 15 Gew.%. Der Fluorgehalt ist damit 1,5 g (= 0,08 Mol F). Des Weiteren enthält das Gemisch ca. 25 Gew.% Platin in Form eines rußgeträgerten Katalysators. Es wird eine Menge von 80 g $CaCO_3$ (wasserfrei, zur Synthese; Fa. Merck) zugegeben; dies entspricht 0,8 Mol $CaCO_3$ (10-facher Überschuss; da 1 Mol $CaCO_3$ = 100 g). Nach der Zugabe mischt man das Gemenge intensiv.

Das Material wird in Aluminiumoxidschiffchen in einem Rohrofen auf 1000°C aufgeheizt und danach zwei Stunden bei dieser Temperatur gehalten. Während der Pyrolyse sind keine fluorhaltigen Verbrennungsgase nachweisbar, der pH-Wert in der nachgeschalteten Waschflasche zeigt keine Änderung und ist weiterhin neutral (pH = 7).

Die Analyse des Verbrennungsrückstandes zeigt einen $CaF_2$-Gehalt von 7,2 Gew.%, im Waschwasser ist der Fluoridgehalt kleiner 3 ppm (< 3 mg/l).

In Zuge der weiteren Verfahrensschritte wird das fluorhaltige Reaktionsprodukt mit ggf. weiteren Inertbestandteilen vom edelmetallhaltigen Material abgetrennt. Das edelmetallhaltige Material wird mit konventionellen Methoden und Verfahren weiter aufgearbeitet.

**Vergleichsbeispiel 1 (VB 1)**

Dieses Beispiel beschreibt die Rückgewinnung von Pt aus fluorhaltigen Katalysatorrückständen ohne Zusatz eines anorganischen Zuschlagstoffes.

10 g fluorpolymerhaltiges Katalysatorgemisch werden durch Ablösen der Elektrodenschichten von katalysatorbeschichteten Membranen (CCMs) gewonnen. Der Gehalt an F-Polymer beträgt ca. 18 Gew.%, der Gehalt an Fluor (F) ca. 15 Gew.%. Des Weiteren enthält das Gemisch ca. 25 Gew.% Platin in Form eines rußgeträgerten Katalysators. Das Material wird in einem Rohrofen auf 1000°C aufgeheizt und danach zwei Stunden bei dieser Temperatur gehalten. Während der Pyrolyse sind deutlich Verbrennungsgase nachweisbar, die in einer nachgeschalteten Waschflasche aufgefangen werden. Die Analyse des Verbrennungsrückstandes zeigt einen Fluorgehalt von 0,1 Gew.%, der pH-Wert im Waschwasser sinkt deutlich in den sauren Bereich ab (pH = 2). Der Fluoridgehalt des Waschwassers steigt auf 200 ppm (= 200 mg/l) an. Dies zeigt, dass erhebliche Emissionen an Fluorwasserstoff (HF) aufgetreten sind.

Der Verbrennungsrückstand wird, wie in Beispiel 1 ausgeführt, weiterverarbeitet.

**Beispiel 2**

Dieses Beispiel beschreibt die Rückgewinnung von Pt und Ru aus katalysatorbeschichteten Membranen (CCMs) in einer zweistufigen Wärmebehandlung (Verbrennung und nachfolgender Schmelzprozess).

Katalysatorbeschichtete Membranen (CCMs ohne GDLs, 50 cm$^2$ aktive Fläche, Pt-Beladung 0,5 mg Pt/cm$^2$, Ru-Beladung 0,25 mg Ru/cm$^2$) werden in einem Häcksler fein zerkleinert. Der Gehalt des Mahlgutes an F-Polymer beträgt 38 Gew.%, der Gehalt an Fluor (F) ca. 30 Gew.%. Zu einer Menge von 10 g des gehäckselten Materials (enthaltend ca. 0,16 Mol F) wird ein Zusatz von 1,6 Mol $CaCO_3$ (= 160 g $CaCO_3$) gegeben. Anschließend wird das Gemenge im Taumelmischer homogenisiert.

Die Wärmebehandlung wird im Kammerofen bei 1000°C und 1 Stunde Verweilzeit unter Luftzufuhr durchgeführt. Es findet keine Entwicklung von Fluorwasserstoff im Ofen statt. Auch nach der Pyrolyse ist kein Fluorid im Waschwasser des Abgases nachweisbar. Der Verbrennungsrückstand wird in einem anschließenden Schmelzverfahren in einem Hochtemperaturschmelzofen weiter verarbeitet, wobei Platin und Ruthenium in der Metallschmelze angereichert werden und das fluorhaltige Reaktionsprodukt ($CaF_2$) verschlackt wird. Zur Rückgewinnung der Edelmetalle wird die Metallschmelze mittels bekannter Methoden weiter aufgearbeitet.

**Beispiel 3**

Dieses Beispiel beschreibt die Rückgewinnung von Pt und Ru aus Membran-Elektroden-Einheiten (MEEs) in einer zweistufigen Wärmebehandlung (Verbrennung und nachfolgender Schmelzprozess).

Fünflagige Membran-Elektroden-Einheiten (CCMs mit zwei GDLs, 50 cm$^2$ aktive Fläche, Pt-Beladung 0,5 mg Pt/cm$^2$, Ru-Beladung 0,25 mg Ru/cm$^2$) werden fein zerkleinert. Zu einer Menge von 20 g des zerkleinerten Materials (enthaltend ca. 0,2 Mol F) wird ein Zusatz von 2 Mol $CaCO_3$ (= 200 g $CaCO_3$) gegeben. Anschließend wird das Gemenge im Taumelmischer homogenisiert.

Die Wärmebehandlung wird im Kammerofen bei 1200°C und 8 Stunden unter Luftzufuhr durchgeführt. Es findet keine Entwicklung von Fluorwasserstoff im Ofen statt. Auch nach der Pyrolyse ist kein Fluorid im Waschwasser des Abgases nachweisbar. Der Verbrennungsrückstand wird in einem nachfolgenden Schmelzverfahren in einem Hochtemperaturschmelzofen weiter verarbeitet, wobei Platin und Ruthenium in der Metallschmelze angereichert werden und das fluorhaltige Reaktionsprodukt ($CaF_2$) verschlackt wird.

Zur Rückgewinnung der Edelmetalle wird die Metallschmelze mittels bekannter Methoden weiter aufgearbeitet.

**Beispiel 4**

Dieses Beispiel beschreibt die Rückgewinnung von Pt und Ru aus Membran-Elektroden-Einheiten (MEEs) in einer einstufigen Wärmebehandlung (Schmelzprozess).

Fünflagige Membran-Elektroden-Einheiten (CCMs mit zwei GDLs, 50 cm$^2$ aktive Fläche, Pt-Beladung 0,5 mg Pt/cm$^2$, Ru-Beladung 0,25 mg Ru/cm$^2$) werden fein zerkleinert. Zu einer Menge von 20 g des zerkleinerten Materials (enthaltend ca. 0,2 Mol F) wird ein Zusatz von 2 Mol $CaCO_3$ (= 200 g $CaCO_3$) gegeben. Anschließend wird das Gemenge im Taumelmischer homogenisiert.

Die Wärmebehandlung wird als Schmelzverfahren in einem Hochtemperatur-Tiegelofen in Gegenwart eines Edelmetallsammlers bei 1200°C und 8 Stunden unter Luftzufuhr durchgeführt. Es findet keine Entwicklung von Fluorwasserstoff im Ofen statt. Auch nach der Wärmebehandlung ist kein Fluorid im Waschwasser des Abgases nachweisbar. Die Edelmetalle Platin und Ruthenium reichern sich in der Metallschmelze an, das fluorhaltige Reaktionsprodukt ($CaF_2$) wird verschlackt und mit dem restlichen Inertmaterial als Schlacke abgetrennt.

Zur Rückgewinnung der Edelmetalle wird die Metallschmelze mittels bekannter Methoden weiter aufgearbeitet.

**Patentansprüche**

1. Verfahren zur Anreicherung von Edelmetallen aus fluorhaltigen Brennstoffzellenkomponenten, umfassend einen Wärmebehandlungsprozess in Gegenwart eines anorganischen Zuschlagstoffes.

2. Verfahren nach Anspruch 1, wobei der anorganische Zuschlagstoff im Wärmebehandlungsprozess das in den Brennstoffzellenkomponenten enthaltene Fluor bindet.

3. Verfahren nach den Ansprüchen 1 oder 2, wobei der Wärmebehandlungsprozess ein- oder mehrstufig als Verbrennung und/oder als Schmelzverfahren durchgeführt wird.

4. Verfahren nach einem der Ansprüche 1 bis 3, wobei der Wärmebehandlungsprozess bei Temperaturen zwischen 500 und 1200°C in Gegenwart von Luft durchgeführt wird.

5. Verfahren nach einem der Ansprüche 1 bis 4, wobei der anorganische Zuschlagstoff nach dem Wärmebehandlungprozess vom edelmetallhaltigen Material getrennt wird.

6. Verfahren nach einem der Ansprüche 1 bis 5, wobei der anorganische Zuschlagstoff aus Verbindungen der Elemente aus der ersten, zweiten und dritten Hauptgruppe (Gruppen IA, IIA, IIIA) des Periodensystems besteht.

7. Verfahren nach einem der Ansprüche 1 bis 6, wobei als anorganischer Zuschlagstoff Oxide, insbesondere $Na_2O$, $K_2O$, MgO oder CaO; Carbonate, insbesondere $CaCO_3$ oder $MgCO_3$; Hydrogencarbonate, insbesondere $CaHCO_3$; und Hydroxide, insbesondere $Ca(OH)_2$ oder $Al(OH)_3$, verwendet werden.

8. Verfahren nach einem der Ansprüche 1 bis 7, wobei der anorganische Zuschlagstoff in einem bis zu 100-fachen Überschuss bezogen auf die molare Menge des zu bindenden Fluors zugesetzt wird.

9.  Verfahren nach einem der Ansprüche 1 bis 8, wobei als fluorhaltige Brennstoffzellenkomponenten einseitig oder zweiseitig katalysatorbeschichtete Membranen, katalysatorbeschichtete Gasverteilerschichten, Membran-Elektroden-Einheiten mit integrierten Gasverteilerschichten, Membran-Elektroden-Einheiten mit integrierten Dichtungen, Membran-Elektroden-Einheiten mit integrierten bipolaren Platten, abgetrennte Katalysatorschichten, Elektrodenschichten, Katalysatoren, Pastenrückstände, Katalysatortinten sowie Vorprodukte und/oder Ausschussteile aus der Fertigung von MEEs, CCMs und GDLs eingesetzt werden.

10. Verfahren nach einem der Ansprüche 1 bis 9, weiterhin umfassend einen Zerkleinerungsprozess vor dem Wärmebehandlungsprozess.

11. Verfahren nach einem der Ansprüche 1 bis 10, weiterhin umfassend eine Aufbereitungsprozess nach dem Wärmebehandlungsprozess, um Edelmetall oder ein Edelmetallsalz, bevorzugt Edelmetall, zu erhalten.

12. Verfahren nach Anspruch 11, wobei der Aufbereitungsprozess nasschemisch durchgeführt wird.

13. Verwendung des Verfahrens nach einem der Ansprüche 1 bis 12 zur Rückgewinnung von Edelmetallen aus fluorhaltigen Brennstoffzellenkomponenten.

14. Verwendung des Verfahrens nach einem der Ansprüche 1 bis 12 zur Rückgewinnung von Edelmetallen aus Brennstoffzellen, Elektrolysezellen und Batterien.

# EP 1 478 042 A1

**Europäisches Patentamt**

## EUROPÄISCHER RECHERCHENBERICHT

Nummer der Anmeldung

EP 03 01 1018

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | PATENT ABSTRACTS OF JAPAN vol. 012, no. 501 (C-556), 27. Dezember 1988 (1988-12-27) & JP 63 210246 A (TOKURIKI HONTEN CO LTD), 31. August 1988 (1988-08-31) * Zusammenfassung * | 1-7,9-14 | H01M8/02 H01M6/52 H01M10/52 C22B11/02 |
| A | * das ganze Dokument * | 8 | |
| Y | | 1-14 | |
| Y | US 3 899 322 A (YOSIM SAMUEL J ET AL) 12. August 1975 (1975-08-12) * Spalte 1, Zeile 16-20 * * Spalte 2, Zeile 17 - Spalte 4, Zeile 53 * * Spalte 5, Zeile 19-36 * * Spalte 6, Zeile 11-24; Beispiele 1-5 * | 1-14 | |
| A | EP 0 330 335 A (JOHNSON MATTHEY PLC) 30. August 1989 (1989-08-30) * Seite 2, Zeile 45 - Seite 3, Zeile 15 * | 1-4 | |
| A | EP 0 274 059 A (RECYTEC SA) 13. Juli 1988 (1988-07-13) * Spalte 2, Zeile 43 - Spalte 6, Zeile 56; Ansprüche 1,2 * | 1-4,9-14 | RECHERCHIERTE SACHGEBIETE (Int.Cl.7) H01M C22B |
| A | GLOE K ET AL: "RECOVERY OF PRECIOUS METALS FROM ELECTRONIC SCRAP, IN PARTICULAR FROM WASTE PRODUCTS OF THE THICK-LAYER TECHNIQUE" HYDROMETALLURGY, ELSEVIER SCIENTIFIC PUBLISHING CY. AMSTERDAM, NL, Bd. 25, Nr. 1, 1. Juni 1990 (1990-06-01), Seiten 99-110, XP000160687 ISSN: 0304-386X * das ganze Dokument * | 1-14 | |

Der vorliegende Recherchenbericht wurde für alle Patentansprüche erstellt

| Recherchenort | Abschlußdatum der Recherche | Prüfer |
|---|---|---|
| MÜNCHEN | 16. Oktober 2003 | Thanos, I |

EPO FORM 1503 03.82 (P04C03)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

**ANHANG ZUM EUROPÄISCHEN RECHERCHENBERICHT**
**ÜBER DIE EUROPÄISCHE PATENTANMELDUNG NR.**                    EP 03 01 1018

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-10-2003

| Im Recherchenbericht angeführtes Patentdokument | | Datum der Veröffentlichung | Mitglied(er) der Patentfamilie | | Datum der Veröffentlichung |
|---|---|---|---|---|---|
| JP 63210246 | A | 31-08-1988 | JP | 2684171 B2 | 03-12-1997 |
| US 3899322 | A | 12-08-1975 | AU | 469925 B2 | 26-02-1976 |
| | | | AU | 5643673 A | 05-12-1974 |
| | | | CA | 989625 A1 | 25-05-1976 |
| | | | CH | 594054 A5 | 30-12-1977 |
| | | | DE | 2330592 A1 | 10-01-1974 |
| | | | FR | 2189522 A1 | 25-01-1974 |
| | | | GB | 1392586 A | 30-04-1975 |
| | | | JP | 1064849 C | 22-09-1981 |
| | | | JP | 49063604 A | 20-06-1974 |
| | | | JP | 56008897 B | 26-02-1981 |
| | | | BE | 801136 A1 | 15-10-1973 |
| EP 0330335 | A | 30-08-1989 | AU | 2966789 A | 17-08-1989 |
| | | | EP | 0330335 A1 | 30-08-1989 |
| | | | FI | 890750 A | 18-08-1989 |
| | | | JP | 1247536 A | 03-10-1989 |
| | | | US | 5076839 A | 31-12-1991 |
| | | | ZA | 8900935 A | 25-10-1989 |
| EP 0274059 | A | 13-07-1988 | AT | 72501 T | 15-02-1992 |
| | | | AU | 597464 B2 | 31-05-1990 |
| | | | AU | 1042088 A | 30-06-1988 |
| | | | BG | 60505 B1 | 30-06-1995 |
| | | | BR | 8707567 A | 21-02-1989 |
| | | | CA | 1323854 C | 02-11-1993 |
| | | | CS | 8709084 A2 | 14-08-1990 |
| | | | DD | 264716 A5 | 08-02-1989 |
| | | | DE | 3776638 D1 | 19-03-1992 |
| | | | DK | 406688 A | 01-09-1988 |
| | | | WO | 8804476 A1 | 16-06-1988 |
| | | | EP | 0274059 A2 | 13-07-1988 |
| | | | ES | 2030417 T3 | 01-11-1992 |
| | | | FI | 883698 A ,B, | 09-08-1988 |
| | | | GR | 3004483 T3 | 31-03-1993 |
| | | | HU | 202017 B | 28-01-1991 |
| | | | IE | 59264 B1 | 26-01-1994 |
| | | | IL | 84741 A | 16-08-1991 |
| | | | IN | 172198 A1 | 01-05-1993 |
| | | | JP | 63197592 A | 16-08-1988 |
| | | | KR | 9606427 B1 | 15-05-1996 |
| | | | MX | 168761 B | 07-06-1993 |
| | | | NO | 883619 A ,B, | 12-08-1988 |
| | | | OA | 8900 A | 31-10-1989 |
| | | | PL | 269370 A1 | 18-08-1988 |

Für nähere Einzelheiten zu diesem Anhang : siehe Amtsblatt des Europäischen Patentamts, Nr.12/82

**ANHANG ZUM EUROPÄISCHEN RECHERCHENBERICHT**
**ÜBER DIE EUROPÄISCHE PATENTANMELDUNG NR.**                    EP 03 01 1018

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-10-2003

| Im Recherchenbericht angeführtes Patentdokument | Datum der Veröffentlichung | Mitglied(er) der Patentfamilie | Datum der Veröffentlichung |
|---|---|---|---|
| EP 0274059          A | | PT       86348 A ,B | 17-01-1989 |
| | | RO      106045 B1 | 30-01-1993 |
| | | SU     1621818 A3 | 15-01-1991 |
| | | TR       23132 A | 10-04-1989 |
| | | US     4874486 A | 17-10-1989 |
| | | YU      224187 A1 | 28-02-1989 |
| | | ZA     8709342 A | 26-04-1989 |

EPO FORM P0461

Für nähere Einzelheiten zu diesem Anhang : siehe Amtsblatt des Europäischen Patentamts, Nr.12/82